# EUROPEAN PATENT SPECIFICATION

(11) **EP 2 706 023 B1**
(45) Date of publication and mention of the grant of the patent: **17.12.2014**
(21) Application number: 12382341.1
(22) Date of filing: 05.09.2012
(51) Int. Cl.: B65G 17/08

(54) **Self-locking link for transverse-mounted conveyor chains**
Selbstarretierendes Glied für quermontierte Förderketten
Liaison autobloquante pour chaînes transporteuses à montage transversal

(43) Date of publication of application: 12.03.2014
(73) Proprietor: Nunez Bajo, Magdalena, 47003 Valladolid (ES)
(72) Inventor: San Miguel Nuñez, Javier, 47012 Valladolid (ES)
(74) Representative: Temino Ceniceros, Ignacio

(56) References cited:
- EP-A1- 1 520 656

## Description

The present invention relates to self-locking links to be used in transverse-mounted conveyor chains, according to the preamble of claim 1. Furthermore, it relates to a transverse-mounted conveyor chain comprising such links and a method for mounting the chain.

### State of the prior art

From the State of the art transverse-mounted chains are known. The problem with this type of well-known chains in the State of the art is to ensure that once mounted the chain will not be dismounted. This is currently achieved by placing screens or walls on the sides of the chain so that the links do not have freedom of movement in the transverse direction of the chain. These screens or walls are also used to perform the guiding of the chain in a certain direction. Another option that is known from the State of the art is the use of attachment means external to the links. Thus, in many cases, when the links are mounted adjacent to each other respectively, pins, screws, and other types of external attachment are used to ensure the correct position of the links in the chain.

The most important problem derived from the use of screens for addressing the chain and the attachment of the links in the chain is that when plastic chains are used, they expand with heat and produce a significant friction with the aforementioned walls. This has significant consequences for the production since the links become much more worn, the entire chain is more hot due to the friction, etc..

The problem of using external attachments is that the number of parts and components that are part of the chain greatly increases so the cost increases, the mounting and maintenance is made difficult, and the conditions of hygiene in the majority of cases worsen.

Document EP-A-1 520 656 discloses a self-locking link according to the preamble of claim 1.

### Explanation of the invention

According to the present invention there are provided a self-locking link as stated in the appended claim 1, a transverse-mounted conveyor chain as stated in the appended claim 7 and a method for mounting a transverse-mounted conveyor chain as stated in the appended claim 8.

The link of the present invention is specially designed to be used in transverse-mounted conveyor chains. The key of this invention is that the proposed link is designed so that each of its sides complement each other, allowing the mounting of a conveyor chain engaging links which are all the same. The particularity of the present invention is that the link has means to be attached to a same link adjacent to it so that when a transverse-mounted conveyor chain is mounted with a plurality of such links, the retention in the transverse direction of all links in the chain is ensured without the need for additional or external elements.

The link of the present invention has a male coupling means extending longitudinally by one side of the link and has a female coupling means extending parallel to the male coupling means by the opposite side of the link. The female coupling means comprises a narrow-mouth groove and the male coupling means comprises a projection with a flared end. In this way, when two or more links are engaged to form a transverse-mounted conveyor chain, the flared end of the male element is entered into the narrow-mouth groove of the female coupling means in the longitudinal direction of the link (that is the transverse direction of the chain).

The link of the present invention incorporates at least a first retaining means that is placed on at least one end of the link in the male coupling means. Also, the link includes a second retaining means placed in the same end as the first retaining means but in the female coupling means. The first retaining means and the second retaining means are complementary.

The end of the link wherein the retaining means are is elastically deformed at the final moment of the assembly of two adjacent links and at the time when the first retaining means of a link is already faced with the second retaining means of an adjacent link, the end of the link returns to its initial position and the retaining means are fitted, ensuring the retention of the links in the transverse direction of the chain. Only the ends wherein the retaining means are are deformed elastically. The rest of the link can not be deformed elastically. The only way to assemble two same links in a chain is by entering the male coupling means of a link in the narrow-mouth groove of the adjacent link in the transverse direction of the chain.

In an embodiment of the invention, the first retaining means could be a pivot complemented with a slot as the second retaining means, in another embodiment it could be used a retaining ring in one of the coupling means complemented with a slot in the other coupling means, in another embodiment could be used a self-locking pin of the link itself, etc.

Likewise, both the first and second retaining means could be in a same coupling means.

It is an object of the present invention a conveyor chain comprising a plurality of self-closing links as described above. Links are engaged in an articulated manner that allow a tilting angle between the links and the direct coupling of the same with transverse mounting of the chain.

The key of the chain of the present invention is that the retention of links in the transverse direction of the chain is carried out without using elements external to the links itself since said links have self-closing. All the links of the chain may be the same since the side of the link that has the male coupling means is complemented with the side of the link that has the female coupling means.

A third object of the present invention is to provide a method for mounting a chain as described above comprising a plurality of links such as those mentioned in this specification in any of the proposed embodiments. The method comprises a step for the introduction of the male coupling means of a first link in the narrow-mouth groove of a second link in the longitudinal direction of the link (that is the transverse direction of the chain) during which the first retaining means and the second retaining means contact, forcing an elastic deformation of the end of one of the links, following a certain mounting direction of the links (D). At the time when the first retaining means and the second retaining means are faced, as they are complementary, one fits into the other and the engagement of the links is ensured in the transverse direction of the chain. At this moment, the end of the link that had been elastically deformed recovers its original position

Throughout the description and claims, the word "comprises" and its variations are not intended to exclude other technical features, additives, components or steps. For those skilled in the art, other objects, advantages and characteristics of the invention will emerge in part from the description and in part from the practice of the invention. The following examples and drawings are provided by way of illustration, and are not intended to be limiting of the present invention. Furthermore, the present invention covers all the possible combinations of particular and preferred embodiments herein indicated.

### Brief description of the drawings

Figure 1 shows a link claimed in the invention in which the first and second retaining means can be seen.
Figure 2 shows the mounting of links as those in Figure 1 in which the first retaining means is a pivot and the second retaining means is a slot.
Figure 3 shows a link claimed in the invention in an embodiment in which the first and second retaining means can be seen, which are in this case a recess and a projection.
Figure 4 shows the mounting of links as those in Figure 3.
Figure 5 shows a link claimed in the invention in which the first and second retaining means are a cut and a self-locking pin.
Figure 6 shows the mounting of links as those in Figure 5.
Figure 7 shows a link claimed in the invention in which the first and second retaining means can be seen.
Figure 8 shows the mounting of links as those in Figure 1 in which the first retaining means is a pivot and the second retaining means is a slot.

### References:

1: Link; 2: Male coupling means; 3: Female coupling means; 4: Narrow-mouth groove; 5: Projection with flared end; 6: First retaining means; 7: Second retaining means; 8: Pivot; 9: Slot; 10: Recess; 11: Projection; 12: Cut; 13: Self-locking pin; 14: Self-deformable projection; D: Assembling direction of the links

### Detailed explanation of the embodiments

The link of the present invention is designed to be used on transverse-mounted conveyor chains to ensure the transversal attachment of the links. The sides of the link complement each other allowing the engagement of a plurality of these same links for the formation of a conveyor chain. The link (1) has a male coupling means (2) extending longitudinally by one side of the link (1) and has a female coupling means (3) extending parallel to the male coupling means (2) by the opposite side of the link (1). The female coupling means (3) comprises a narrow-mouth groove (4) and the male coupling means (2) comprises a projection with a flared end (5). The link also comprises self-locking means. These means allows the retention of two adjacent links forming a chain, the retention being performed in the transverse direction of the chain.

Such self-locking means are called in the present specification first retaining means (6), which is placed at a end of the male coupling means (2), and second retaining means (7), which is placed at a end of the female coupling means (3). A essential feature of the link (1) of the invention is that al least one of the retaining means (6, 7) allows the elastic deformation of one of the coupling elements (2, 3).

The end of the link (1) wherein the first retaining means (6) and the second retaining means (7) are is elastically deformed at the initial or final moment of the assembling of two adjacent links (1), allowing the interconnection of the first retaining means (6) and the second retaining means (7). The end of the link recovers its original position at the moment when the retaining means are fitted to each other. Only the ends of the links may be deformed elastically to allow the movement between the first retaining means (6) and the second retaining means (7). The rest of the link is not elastically deformed.

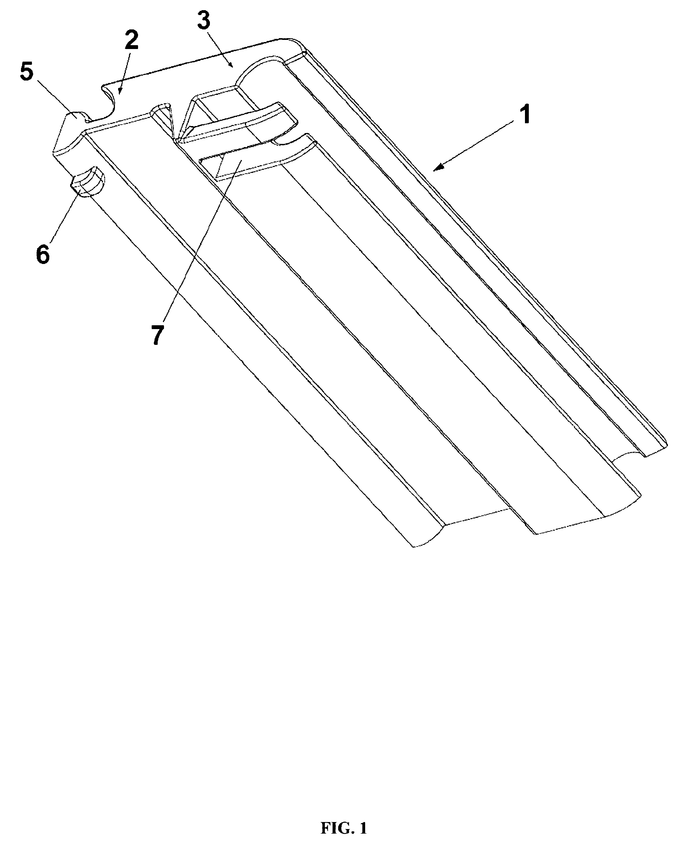

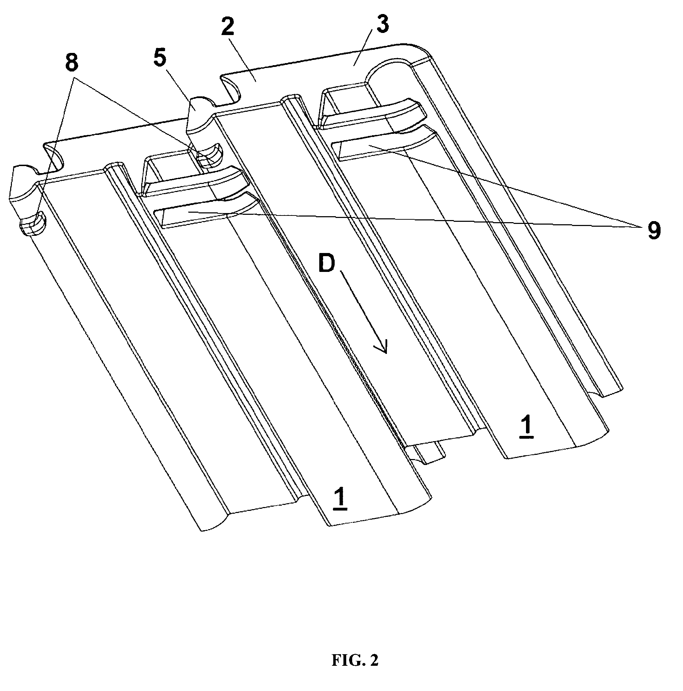

In an embodiment of the invention appreciated in Figures 1 and 2 the first retaining means (6) is a pivot (8) that is at the end of the male coupling means (2) and the second retaining means (7) is a slot (9) that is at the end of the female coupling means (3) in correspondence with the pivot (8). The above-mentioned slot (9) extends in the transverse direction of the link (1) corresponding to the longitudinal direction of a chain mounted with several adjacent links (1). In this case, the pivot (8) and the slot (9) are complementary since the slot has dimensions that allow the pivot (8) fits in the transverse direction of the chain. Likewise, instead of being a slot (9), the second retaining means could be in this case a hole with the same shape as the pivot (8) that must be entered into it. When two same links (1) are linked, the male coupling means (2) in entered into the groove (4) of the female coupling means (3) of the adjacent link. In the final step of this mounting the first retaining means (6), which in this case is the pivot (8), contacts with the end of the female coupling means (3) of the adjacent link and forces it to suffer an elastic deformation. This deformation is maintained until such time as the first retaining means (6), in this case the pivot (8), and the second retaining means (7), in this case the slot (9), are interrelated, in this case the pivot (8) is entered into the slot (9). The transverse retention of the adjacent links in the chain is thus ensured and the end of the link that had been elastically deformed recovers its position. Likewise, in an embodiment the first retaining means (6) placed at the end of the male coupling means (2) could be a retaining ring extending around a semicircular perimeter of the flared end in the projection (5) of the male coupling means (2), in the transverse direction of the link. In this case the second retaining means (7) is a retaining slot complementary with the retaining ring.

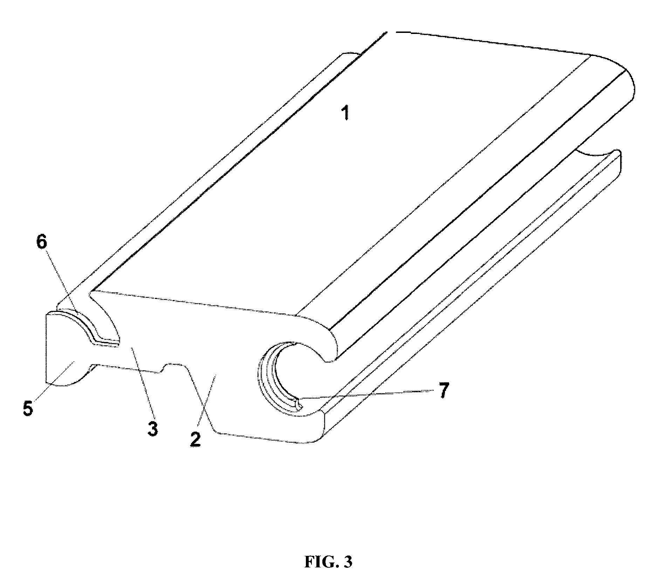

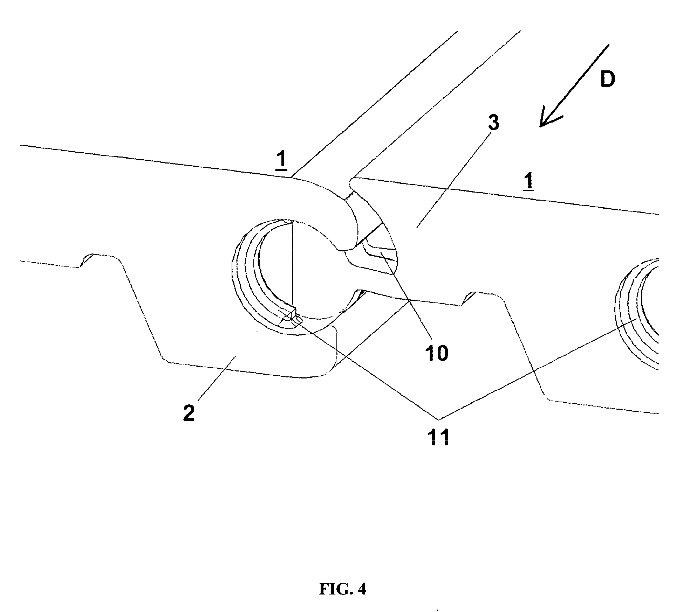

In another embodiment showed in Figures 3 and 4, the first retaining means (6) is a recess (10) that cross in the transverse direction of the link the projection with flared end (5) of the male coupling means (2). The second retaining means (7) is a projection (11) complementary to the recess (10) and that extends in the transverse direction of the link along the perimeter of the groove (4). When the assembly of two adjacent links is carried out, at the final moment of the assembly, the end of the male coupling means (2) contacts with the second retaining means (7) causing the end of the female coupling means (3) to be elastically deformed. When the first and second retaining means are faced, the second retaining means (7) remains inside the first retaining means (6), ensuring the retention in the transverse direction of the chain.

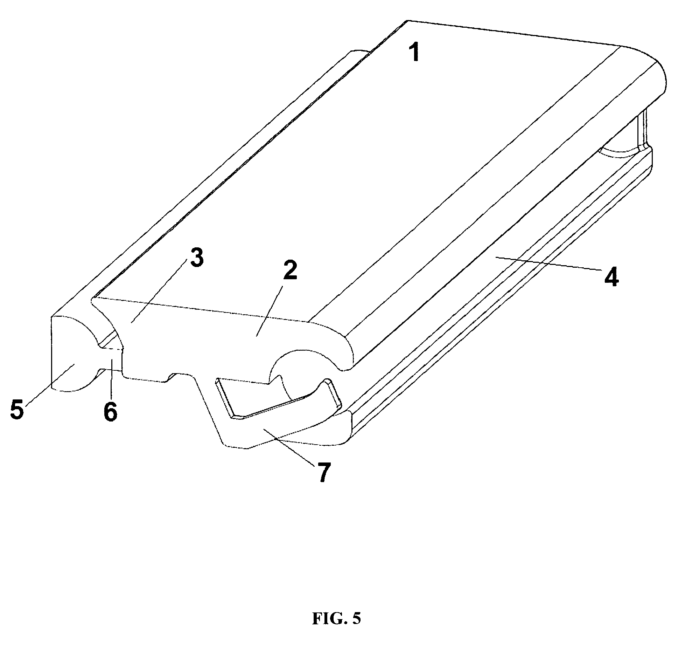

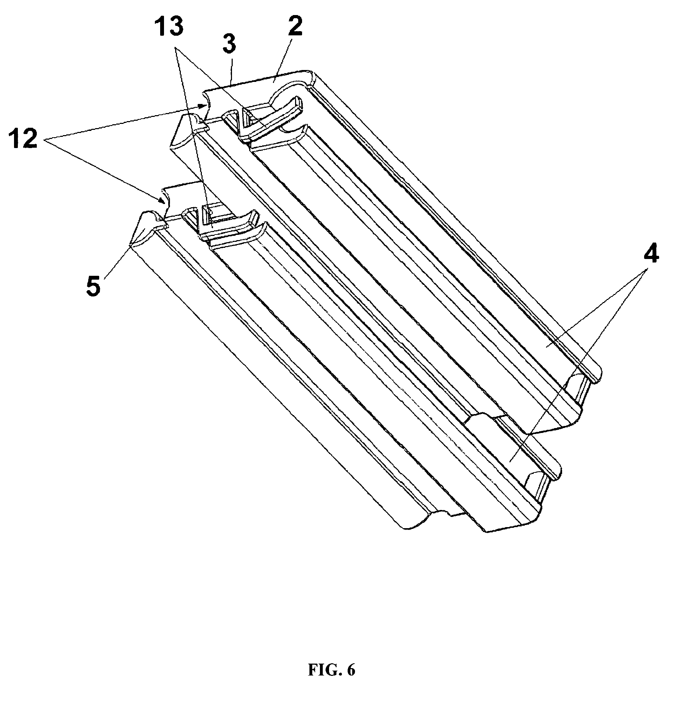

Another possible embodiment of the invention is illustrated in Figures 5 and 6. In this case, the first retaining means (6) is a cut (12) at the end of the male coupling means, this cut (12) affects the part of the projection with flared end (5) of the male coupling means. The second retaining means (7) is a self-locking pin (13) which is at the end of the female coupling (3). Said self-locking pin (13) in its resting position locks the access to the groove (4). When performing the assembly of two adjacent links the male coupling means (3) of a first link is entered into the groove (4) of a second link. When entering into said groove (4) contacts with the self-locking pin (13), it is elastically deformed allowing the pass of the male coupling means (2) towards the groove (4). When it is totally entered, the first retaining means (6) which was a cut (12) is faced to the second retaining means (7), said second retaining means recovers its initial position locking the outgoing of the groove and thus ensuring the retention of the links in the transverse direction of the chain. In turn, the other end of the link is locked to avoid the outgoing of one of the links at said end. Another possible option would be to have this same mechanism at the other end of the link.

The first retaining means (6) can be, in a embodiment of the invention, in the male coupling means (2), said first retaining means (6) being complemented with a second retaining means (7) that is in the female coupling means (3). The first retaining means can be for example a pivot (8), as can be seen for example in Figure 1, could be a projection (11), for example a projection with the shape of a ring as can be seen in Figure 3, be semicircular, etc. That is, the shapes of the first retaining means (6) that would be obvious to a person skilled in the art in view of the present description would fall within the protection of the present invention. This first retaining means (6) complements with a second retaining means (7) that is in the female coupling means (3), in this case being the female coupling means (3) of the link which is deformed to allow the pass of the male coupling means (2).

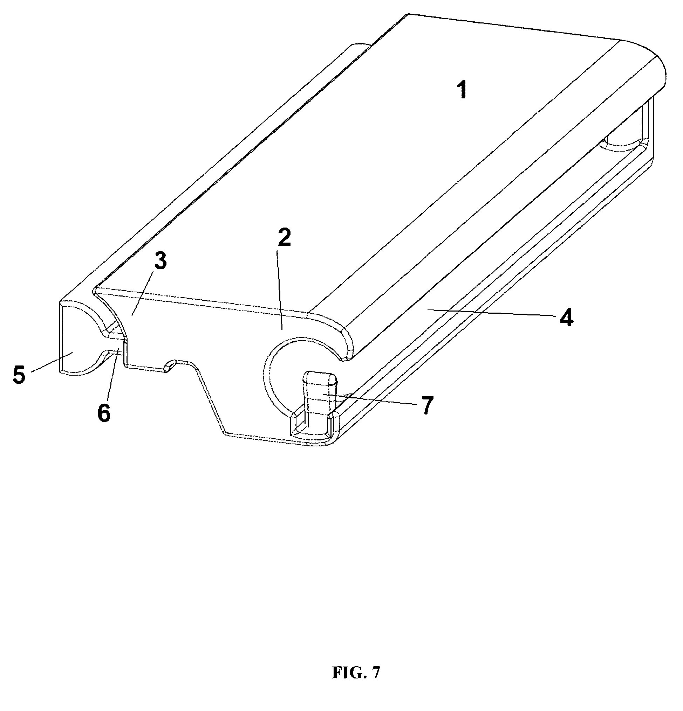

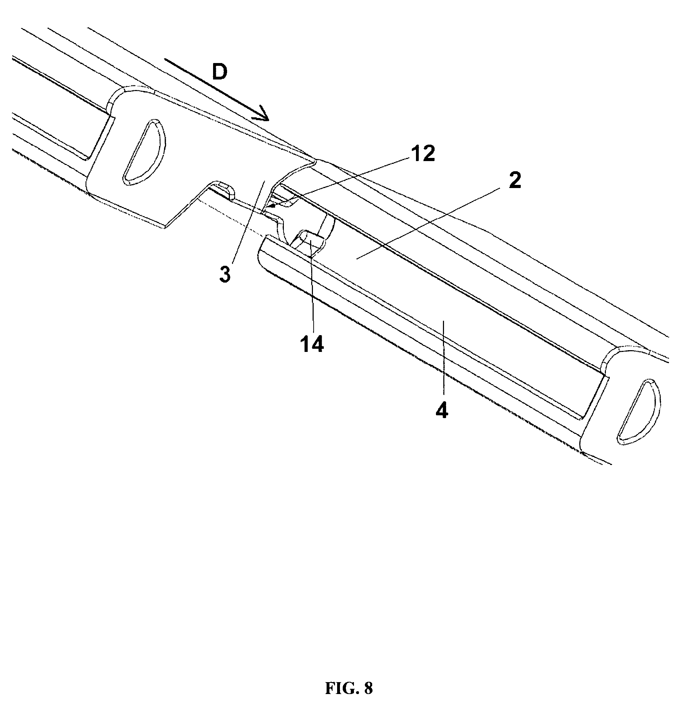

Likewise, in another embodiments of the invention the second retaining means (7) that is in the female coupling means (3) can be a self-deformable projection (14) and complements with the first retaining means (6) that is in the male coupling means (2) and in this case is a cut (12). The first retaining means (6) can have different shapes as discussed above but it must comply with the characteristic of being deformable. This embodiment is appreciated for example in Figure 7. Likewise, in Figure 8 the mounting of two links of this type can be seen. It is also appreciated the mounting direction of said links (D).

In another embodiments of the invention, the second retaining means (7) that is in the female coupling means (3) can be an elastically deformable projection which complements with the corresponding first retaining means (6) of the adjacent link. This case is depicted for example in Figure 5 wherein it is appreciated that the second retaining means (7) is a self-locking pin (13) and the first retaining means is a cut (12) in the male coupling means (2) of the link (1).

Also it is an object of the present invention a transverse-mounted chain comprising a plurality of links (1) as those described above. Said links are engaged in an articulated manner allowing the tilt between links. The key of the chain of the invention is that it has transverse mounting and the links are retained in its position in the transverse direction (the mounting direction) without the need for elements external to the links.

As described above, the links (1) have a self-locking system comprising a first retaining means (6) in the male coupling means (2) and a second retaining means (7) in the female coupling means (3) which are complementary to each other so when joining two same links, the first retaining means (6) of one is interrelated with the second retaining means (7) of that adjacent, and so on as links are added to the chain.

A third object of the present invention is to provide a method for mounting a chain as described above comprising a plurality of links such as those mentioned in this specification in any of the proposed embodiments. The method comprises a step for the introduction of the male coupling means (2) of a first link in the narrow-mouth groove (4) of a second link during which the first retaining means (6) and the second retaining means (7) contact, forcing an elastic deformation of the end of one of the links, following a certain mounting direction of the links (D). At the time when the first retaining means (6) and the second retaining means (7) are faced, as they are complementary, one fits into the other and the engagement of the links is ensured in the transverse direction of the chain. At this moment, the end of the link that had been elastically deformed recovers its original position.

All the embodiments of the link can have bevels in the retaining means to facilitate the mounting and dismounting operations with adjacent links.

## Claims

1. Self-locking link for transverse-mounted conveyor chains comprising a male coupling means (2) extending longitudinally by one side of the link (1) and has a female coupling means (3) extending parallel to the male coupling means (2) by the opposite side of the link (1), having the female coupling means (3) a narrow-mouth groove (4) and the male coupling means (2) comprises a projection with a flared end (5) **characterized in that** it comprises self-locking means, which are first retaining means (6) located at an end of the male coupling means (2) and a second retaining means (7) located at an end of the female coupling means (3) in correspondence with the first retaining means (6) and complementary to it, where at least one of the retaining means (6, 7) allows the elastic deformation of one of the coupling elements (2, 3).

2. Link according to claim 1 wherein the first retaining means (6) is a pivot (8) and the second retaining means (7) is a slot (9) located in correspondence with the pivot (8), extending in the transverse direction of link (1).

3. Link according to claim 1 wherein the first retaining means (6) is a pivot (8) and the second retaining means (7) is a hole with the same shape as the pivot (8), located in correspondence with it, extending in the transverse direction of link (1).

4. Link according to claim 1 wherein the first retaining means (6) is a recess (10) which crosses in the transverse direction of the link the projection with flared end (5) of the male coupling means (2) and the second retaining means (7) is a projection (11) complementary to the recess (10) and that extends in the transverse direction of the link along the perimeter of the groove (4).

5. Link according to claim 1 wherein the first retaining means (6) is a cut (12) at the end of the male coupling means, this cut (12) affects the part of the projection with flared end (5) of the male coupling means, and the second retaining means (7) is a self-locking pin (13) that is at the end of the female coupling (3) such that said self-locking pin (13) in its resting position locks the access to the groove (4).

6. Link according to claim 1 wherein at least one of the retaining means (6, 7) is a deformable projection (14).

7. Transverse-mounted conveyor chain comprising at least two links according to claims 1 through 6.

8. Method for mounting a transverse-mounted conveyor chain according to claim 7 **characterized in that** it comprises a step for the introduction of the male coupling means (2) of a first link in the narrow-mouth groove (4) of a second link in the transverse direction of the chain during which the first retaining means (6) and the second retaining means (7) contact, forcing an elastic deformation of the end of one of the links until the first retaining means (6) and the second retaining means (7) are faced, by engaging each other and securing the engagement of the links in the transverse direction of the chain.

## Patentansprüche

1. Glied mit automatischem Verschluss für Transportketten für eine Quermontage, umfassend ein Einsteckkupplungsteil (2), dass sich längs einer der Seiten des Glieds (1) erstreckt und ein Aufnahmekupplungsteil (3), das sich auf der gegenüberliegenden Seite des Glieds (1) parallel zum Einsteckkupplungsteil (2) erstreckt, wobei das Aufnahmekupplungsteil (3) eine verengte Mündungsrinne (4) aufweist und das Einsteckkupplungsteil (2) einen Vorsprung mit einem aufgeweiteten Ende (5) umfasst, **dadurch gekennzeichnet, dass** es einige Mittel zum automatischen Verschluss aufweist, bestehend aus einem ersten Haltemittel (6), das an einem Ende des Einsteckkupplungsteils(2) angeordnet ist und aus einem zweiten Haltemittel (7), das an einem Ende des Aufnahmekupplungsteils (3) angeordnet ist und dem ersten Haltemittel (6) zugeordnet ist und komplementär zu diesem ausgebildet ist, wobei mindestens eines der Haltemittel (6, 7) die elastische Verformung eines der Kupplungselemente (2, 3) ermöglicht.

2. Glied nach Anspruch 1, wobei das erste Haltemittel (6) ein Zapfen (8) ist und das zweite Haltemittel (7) eine Nut (9), die dem Zapfen (8) zugeordnet ist und die sich in Querrichtung des Glieds (1) erstreckt.

3. Glied nach Anspruch 1, wobei das erste Haltemittel (6) ein Zapfen (8) ist und das zweite Haltemittel (7) ein Loch mit der gleichen Form wie der Zapfen (8), der diesem zugeordnet ist und sich in Querrichtung des Glieds (1) erstreckt.

4. Glied nach Anspruch 1, wobei das erste Haltemittel (6) ein Rücksprung (10) ist, der sich in Querrichtung des Glieds durch den Vorsprung (5) mit aufgeweitetem Ende des Einsteckkupplungsteils (2) hindurch erstreckt und wobei das zweite Haltemittel (7) ein Vorsprung (11) ist, der komplementär zu dem Rücksprung (10) ausgeführt ist und sich in Queruchtung des Glieds über den Umfang der Rinne (4) erstreckt.

5. Glied nach Anspruch 1, wobei das erste Haltemittel (6) ein Einschnitt (12) am Ende des Einsteckkupplungsteils ist und dieser Einschnitt (12) zu dem Teil des Vorsprungs mit aufgeweitetem Ende (5) des Einsteckkupplungsteils gehört und das zweite Haltemittel (7) ein selbstspeitender Schenkel (13) ist, der sich am Ende der Aufnahmekupplung (3) befindet, so dass der genannte selbstsperrende Schenkel (13) in seiner Ruhelage den Zugang zur Rinne (4) blockiert.

6. Glied nach Anspruch 1, wobei mindestens eines der Haltemittel (6, 7) ein verformbarer Vorsprung (14) ist.

7. Kette für eine Quermontage, umfassend mindestens zwei Glieder nach einem der Ansprüche 1 bis 6.

8. Montageverfahren für eine Kette für eine Quermontage nach Anspruch 7, **dadurch gekennzeichnet, dass** es einen Schutt für die Einführung des Einsteckkupplungsteils (2) eines ersten Glieds in die verengte Mündungsrinne (4) eines zweiten Glieds in Querrichtung der Kette umfasst, während der das erste Haltemittel (6) und das zweite Haltemittel (7) miteinander in Anlage kommen und so eine elastische Verformung des Endes eines der Glieder bewirken, bis das erste Haltemittel (6) und das zweite Haltemittel (7) einander gegenüber zu liegen kommen, ineinander einrasten und die Befestigung der Glieder in die Querrichtung der Kette sichern.

## Revendications

1. Maillon avec auto-fermeture pour chaînes transporteuses d'assemblage transversal comprenant un élément d'accouplement mâle (2) s'étendant longitudinalement sur l'un des côtés du maillon (1) et un élément d'accouplement femelle (3) s'étendant parallèlement à l'élément d'accouplement mâle (2) sur le côté opposé dudit maillon (1), ayant l'élément d'accouplement femelle (3) une cannelure d'embouchure étranglée (4) et comprenant l'élément d'accouplement mâle (2) une saillie avec une extrémité élargie (5) **caractérisé en ce qu'**il comprend des moyens d'auto-fermeture qui sont un premier moyen de retenu (6) situé dans une extrémité de l'élément d'accouplement mâle (2) et un deuxième élément de retenu (7) situé dans une extrémité de l'élément d'accouplement femelle (3) en correspondance avec le premier moyen de retenu (6) et complémentaire à celui-ci, où au moins l'un des moyens de retenu (6, 7) permet la déformation élastique de l'un des éléments d'accouplement (2, 3).

2. Maillon selon la revendication 1 dans lequel le premier moyen de retenu (6) est un pivot (8) et le deuxième moyen de retenu (7) est une rainure (9) située en correspondance avec le pivot (8), s'étendant dans la direction transversale du maillon (1).

3. Maillon selon la revendication 1 dans lequel le premier moyen de retenu (6) est un pivot (8) et le deuxième moyen de retenu (7) est un trou de la même forme que ledit pivot (8), situé en correspondance avec celui-ci, s'étendant dans la direction transversale du maillon (1).

4. Maillon selon la revendication 1 dans lequel le premier moyen de retenu (6) est un renfoncement (10) traversant dans la direction transversal du maillon la saillie (5) d'extrémité élargie de l'élément d'accouplement mâle (2) et le deuxième moyen de retenu (7) est une saillie (11) complémentaire du renfoncement (10) et s'étendant dans la direction transversale du maillon sur le périmètre de la cannelure (4).

5. Maillon selon la revendication 1 dans lequel le premier moyen de retenu (6) est un découpage (12) dans l'extrémité de l'élément d'accouplement mâle, concernant ce découpage (12) la partie de la saillie de extrémité élargie (5) de l'élément d'accouplement mâle et le deuxième moyen de retenu (7) est une tige autobloquante (13) située dans l'extrémité de l'accouplement femelle (3) de telle façon que la dite tige autobloquante (13) dans sa position de repos bloque l'accès à la cannelure (4).

6. Maillon selon la revendication 1 dans lequel au moins l'un des moyens de retenu (6, 7) est une saillie déformable (14).

7. Chaîne de montage transversal comprenant au moins deux maillons selon l'une des revendications 1 à 6.

8. Méthode de montage d'une chaîne de montage transversal selon la revendication 7 **caractérisée en ce qu'**elle comprend une étape d'introduction de l'élément d'accouplement mâle (2) d'un premier maillon dans la cannelure d'embouchure étranglée (4) d'un deuxième maillon dans la direction transversale de la chaîne pendant laquelle le premier moyen de retenu (6) et le deuxième moyen de retenu (7) entrent en contact en forçant une déformation élastique de l'extrémité de l'un des maillons jusqu'à ce que le premier moyen de retenu (6) et le deuxième moyen de retenu (7) fassent face, s'emboitant l'un dans l'autre et assurant la fixation des maillons dans la direction transversale de la chaîne.
